# EUROPEAN PATENT APPLICATION

(11) **EP 4 350 511 A1**
(43) Date of publication of application: **10.04.2024**
(21) Application number: 21945512.8
(22) Date of filing: 18.06.2021
(51) Int. Cl.: G06F 9/445, G06F 30/20

(54) **METHOD AND APPARATUS FOR CO-SIMULATION**

(71) Applicant: Huawei Technologies Co., Ltd., Shenzhen, Guangdong 518129 (CN)
(72) Inventor: PENG, Lei, Shenzhen, Guangdong 518129 (CN); GAO, Zhenlong, Shenzhen, Guangdong 518129 (CN); WANG, Junhan, Shenzhen, Guangdong 518129 (CN); WANG, Bin, Shenzhen, Guangdong 518129 (CN)
(74) Representative: Huawei European IPR
(86) International application number: PCT/CN2021/100865
(87) International publication number: WO 2022/261927

(57) **Abstract**

This application relates to the simulation field, in particular, to the vehicle simulation field, and in particular, to a collaborative simulation method and an apparatus. The method includes: separately sending a plurality of pieces of first simulation data to a corresponding client-side control apparatus in at least one client-side control apparatus in each collaborative simulation period, where the first simulation data sent to each client-side control apparatus is simulation data in which input data required for simulation of a simulation model corresponding to the client-side control apparatus is encapsulated. The method further includes: receiving a plurality of pieces of second simulation data from at least one client-side control apparatus in each collaborative simulation period, where each piece of second simulation data is data obtained by encapsulating, by using a same data structure, a simulation result output by one of the plurality of simulation models, the simulation result is used as the input data in a next collaborative simulation period, and the data structure can be used to distinguish simulation results output by the plurality of simulation models from each other. Simulation precision can be improved by using the method and the apparatus.

## Description

### TECHNICAL FIELD

This application relates to the simulation field, and in particular, to a collaborative simulation method and an apparatus.

### BACKGROUND

With the tide of intelligent vehicles sweeping the global automobile industry, the development of automobile software functions has become a key link in automobile innovation, differentiation, and brand enhancement. A development period of a new vehicle is about 28 to 36 months, and the development and verification of software functions take about 12 to 18 months. Currently, a vehicle has more than 1000 functions. As the time goes by, a quantity of new functions will increase exponentially. Therefore, how to improve software function development efficiency has become a key problem that restricts vehicle development efficiency. In addition, the conventional vehicle function development is usually based on independent electronic control units (Electronic Control Unit, ECU). As a result, a vehicle has more than 100 ECUs. In addition, functions of each ECU are independent, and internal core algorithms are usually controlled by key suppliers, which does not comply with strategic planning of vehicle original equipment manufacturer (Original Equipment Manufacturer, OEM) software development. Therefore, it extremely is important to break through information exchange barriers of the ECUs and provide a public vehicle function development platform for an ecosystem of partners such as OEMs, suppliers, and universities. Therefore, the industry proposes a digital vehicle platform, to separate software from hardware by constructing an intermediate layer, and provide a functional application programming interface (Application Programing Interface, API) for the OEMs to quickly develop vehicle functions.

After functional modules of the vehicle are developed by using the digital vehicle platform, to reduce repeated modification of the developed functional modules in the subsequent real vehicle debugging process, simulation development and verification are usually performed on the functional modules before the real vehicle debugging. Therefore, to promote application of the digital vehicle platform in the industry, the digital vehicle platform needs to provide simulation development and verification tools. The vehicle functional model in loop (Model in Loop, MIL) may provide vehicle simulation by using existing simulation models. These simulation models may include, for example, a vehicle chassis simulation model, a vehicle body simulation model, a vehicle sensor and actuator simulation model, a vehicle driving scenario simulation model, a vehicle API function interface simulation model, and a vehicle control function simulation model. Therefore, the vehicle function MIL can be applied to simulation development and verification tools of the digital vehicle platform.

When the vehicle function MIL provides vehicle simulation by using the existing simulation models, data exchange needs to be performed between these simulation models. However, these simulation models are usually software developed by different vendors or individuals, and data output by the simulation models is complex, which may easily cause a data exchange error and reduce simulation precision. Therefore, ensuring accurate data exchange during a simulation process of the digital vehicle platform in a MIL joint simulation process has become a key technology direction for promoting a service oriented architecture (Service Oriented Architecture, SOA).

### SUMMARY

In view of this, this application provides a collaborative simulation method and an apparatus, to improve simulation precision.

A first aspect of this application provides a collaborative simulation method. The method includes: separately sending a plurality of pieces of first simulation data to a corresponding client-side control apparatus in at least one client-side control apparatus in each collaborative simulation period, where each client-side control apparatus corresponds to at least one of a plurality of simulation models, and the first simulation data sent to each client-side control apparatus is simulation data in which input data required for simulation of the simulation model corresponding to the client-side control apparatus is encapsulated. In addition, the method further includes: receiving, in each collaborative simulation period, a plurality of pieces of second simulation data from the at least one client-side control apparatus as the plurality of pieces of first simulation data in a next collaborative simulation period, where each piece of second simulation data is data obtained by encapsulating, by using a same data structure, a simulation result output by one of the plurality of simulation models, the simulation result is used as the input data in a next collaborative simulation period, and the data structure can be used to distinguish simulation results output by the plurality of simulation models from each other.

It can be learned from the foregoing that the data structure can be used to distinguish the simulation results output by the plurality of simulation models from each other, and the simulation results output by the plurality of simulation models are encapsulated by the data structure, to obtain a plurality of pieces of simulation data that are distinguished from each other and that are in a one-to-one correspondence with the simulation results. Therefore, when the simulation data is subsequently provided to the plurality of simulation models for simulation, each piece of simulation data can be correctly provided to a corresponding simulation module without a data exchange error, thereby improving precision of collaborative simulation. In addition, it can be learned from the foregoing that synchronous simulation of the plurality of simulation models is implemented in a manner of a collaborative simulation period, so that data exchange and simulation calculation of the plurality of simulation models are performed at a same progress without disorder, thereby improving precision of collaborative simulation.

According to the first aspect, in a first possible implementation of the method, the data structure includes at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result.

It can be learned from the foregoing that, in addition to the name of the encapsulated simulation result, the data structure further includes the name of the client-side control apparatus that sends the simulation data in which the encapsulated simulation result is encapsulated and the data domain to which the encapsulated simulation result belongs. Therefore, different simulation results can be distinguished in a simple and effective manner by using the data structure.

According to the first aspect, in a second possible implementation of the method, the first simulation data sent to each client-side control apparatus is determined based on a data routing relationship, where the data routing relationship indicates client-side control apparatuses to which the plurality of pieces of first simulation data are respectively sent.

It can be learned from the foregoing that the data routing relationship is used to indicate client-side control apparatuses to which the plurality of pieces of first simulation data are respectively sent, and the first simulation data to be sent to each client-side control apparatus is determined based on the data routing relationship. Therefore, the first simulation data to be sent to each client-side control apparatus can be conveniently and quickly determined.

According to the second possible implementation of the first aspect, in a third possible implementation of the method, the data routing relationship includes a plurality of pieces of data, and each piece of data includes: a name of the input data encapsulated in one piece of simulation data in the plurality of pieces of first simulation data; a name of a client-side control apparatus that sends the one piece of simulation data; a data domain to which the input data encapsulated in the one piece of simulation data belongs; and a name of a client-side control apparatus that needs to receive the one piece of simulation data.

It can be learned from the foregoing that the data routing relationship defines, by using the name of the input data encapsulated in the first simulation data, the name of the client-side control apparatus that sends the first simulation data, the data domain to which the input data encapsulated in the first simulation data belongs, and the name of the client-side control apparatus that needs to receive the first simulation data, a specific client-side control apparatus to which each piece of first simulation data is to be sent. Therefore, the data routing relationship can be used to define, in a simple and effective manner, a destination control apparatus to which each piece of first simulation data is to reach.

According to the first aspect, in a first possible implementation of the method, the collaborative simulation period is longer than first duration, and the first duration is equal to a simulation period of a simulation model with a longest simulation period in the plurality of simulation models.

It can be learned from the foregoing that the collaborative simulation period is longer than the maximum simulation period of the plurality of simulation models, so that each simulation calculation of the plurality of simulation models can be completed together. Therefore, time synchronization of the plurality of simulation models is implemented.

A second aspect of this application provides a collaborative simulation method. The method includes: obtaining at least one piece of first simulation data from a server-side control apparatus in each collaborative simulation period, where the at least one piece of first simulation data is simulation data in which input data required for simulation of at least one simulation model in a plurality of simulation models is encapsulated. The method further includes: providing, to the at least one simulation model, the input data obtained by parsing the at least one piece of first simulation data. The method further includes: receiving, in each collaborative simulation period, at least one simulation result output by the at least one simulation model. The method further includes: sending at least one piece of second simulation data to the server-side control apparatus in each collaborative simulation period, where each piece of second simulation data is obtained by encapsulating one of the at least one simulation result by using a same data structure, and the data structure can be used to distinguish simulation results output by the plurality of simulation models from each other.

It can be learned from the foregoing that the data structure can be used to distinguish the simulation results output by the plurality of simulation models from each other, and the simulation results output by the plurality of simulation models are encapsulated by the data structure, to obtain a plurality of pieces of simulation data that are distinguished from each other and that are in a one-to-one correspondence with the simulation results. Therefore, when the simulation data is subsequently provided to the plurality of simulation models for simulation, each piece of simulation data can be correctly provided to a corresponding simulation module without a data exchange error, thereby improving precision of collaborative simulation.

According to the second aspect, in a first possible implementation of the method, the data structure includes at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result.

It can be learned from the foregoing that, in addition to the name of the encapsulated simulation result, the data structure further includes the name of the client-side control apparatus that sends the simulation data in which the encapsulated simulation result is encapsulated and the data domain to which the encapsulated simulation result belongs. Therefore, different simulation results can be distinguished in a simple and effective manner by using the data structure.

According to the second aspect, in a second possible implementation of the method, the collaborative simulation period is longer than first duration, and the first duration is equal to a simulation period of a simulation model with a longest simulation period in the plurality of simulation models.

It can be learned from the foregoing that the collaborative simulation period is longer than the maximum simulation period of the plurality of simulation models, so that each simulation calculation of the plurality of simulation models can be completed together. Therefore, time synchronization of the plurality of simulation models is implemented.

A third aspect of this application provides a server-side control apparatus. The server-side control apparatus includes a sending module and a receiving module. The sending module is configured to separately send a plurality of pieces of first simulation data to a corresponding client-side control apparatus in at least one client-side control apparatus in each collaborative simulation period, where each client-side control apparatus corresponds to at least one of a plurality of simulation models, and the first simulation data sent to each client-side control apparatus is simulation data in which input data required for simulation of the simulation model corresponding to the client-side control apparatus is encapsulated. The receiving module is configured to receive, in each collaborative simulation period, a plurality of pieces of second simulation data from the at least one client-side control apparatus as the plurality of pieces of first simulation data in a next collaborative simulation period, where each piece of second simulation data is data obtained by encapsulating, by using a same data structure, a simulation result output by one of the plurality of simulation models, the simulation result is used as the input data in a next collaborative simulation period, and the data structure can be used to distinguish simulation results output by the plurality of simulation models from each other.

According to the third aspect, in a first possible implementation of the server-side control apparatus, the data structure includes at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result.

According to the third aspect, in a second possible implementation of the server-side control apparatus, the first simulation data sent to each client-side control apparatus is determined based on a data routing relationship, where the data routing relationship indicates client-side control apparatuses to which the plurality of pieces of first simulation data are respectively sent.

According to the second possible implementation of the third aspect, in a third possible implementation of the server-side control apparatus, the data routing relationship includes a plurality of pieces of data, and each piece of data includes: a name of the input data encapsulated in one piece of simulation data in the plurality of pieces of first simulation data; a name of a client-side control apparatus that sends the one piece of simulation data; a data domain to which the input data encapsulated in the one piece of simulation data belongs; and a name of a client-side control apparatus that needs to receive the one piece of simulation data.

According to the third aspect, in a fourth possible implementation of the server-side control apparatus, the collaborative simulation period is longer than first duration, and the first duration is equal to a simulation period of a simulation model with a longest simulation period in the plurality of simulation models.

For technical effects of the third aspect, refer to the technical effects of the first aspect and the possible implementations of the first aspect. Details are not described herein again.

A fourth aspect of this application provides a client-side control apparatus. The client-side control apparatus includes an obtaining module, a providing module, a receiving module, and a sending module. The obtaining module is configured to obtain at least one piece of first simulation data from a server-side control apparatus in each collaborative simulation period, where the at least one piece of first simulation data is simulation data in which input data required for simulation of at least one simulation model in a plurality of simulation models is encapsulated. The providing module is configured to provide, to the at least one simulation model, the input data obtained by parsing the at least one piece of first simulation data. The receiving module is configured to receive, in each collaborative simulation period, at least one simulation result output by the at least one simulation model. The sending module is configured to send at least one piece of second simulation data to the server-side control apparatus in each collaborative simulation period, where each piece of second simulation data is obtained by encapsulating one of the at least one simulation result by using a same data structure, and the data structure can be used to distinguish simulation results output by the plurality of simulation models from each other.

According to the fourth aspect, in a first possible implementation of the client-side control apparatus, the data structure includes at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result.

According to the fourth aspect, in a second possible implementation of the client-side control apparatus, the collaborative simulation period is longer than first duration, and the first duration is equal to a simulation period of a simulation model with a longest simulation period in the plurality of simulation models.

For technical effects of the fourth aspect, refer to the technical effects of the second aspect and the possible implementations of the second aspect. Details are not described herein again.

A fifth aspect of this application provides a control system, where the control system includes the server-side control apparatus according to any one of the third aspect or the possible implementations of the third aspect, and the client-side control apparatus according to any one of the fourth aspect or the possible implementations of the fourth aspect.

A sixth aspect of this application provides a computing device, including at least one processor and at least one memory. The memory stores program instructions, and when the program instructions are executed by the at least one processor, the at least one processor is enabled to perform the method according to any one of the first aspect or the possible implementations of the first aspect, or the method according to any one of the second aspect or the possible implementations of the second aspect.

A sixth aspect of this application provides a computer-readable storage medium, where the computer-readable storage medium stores program instructions. When the program instructions are executed by a computer, the computer is enabled to perform the method according to any one of the first aspect or the possible implementations of the first aspect, or the method according to any one of the second aspect or the possible implementations of the second aspect.

A seventh aspect of this application provides a computer program product, where the computer program product includes program instructions. When the program instructions are executed by a computer, the computer is enabled to perform the method according to any one of the first aspect or the possible implementations of the first aspect, or the method according to any one of the second aspect or the possible implementations of the second aspect.

These aspects and other aspects of this application are more concise and easy to understand in descriptions of the following (a plurality of) embodiments.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, same reference numerals represent same content. The specific accompanying drawings are described below.
FIG. 1 is a schematic diagram of an architecture of a control system for controlling collaborative simulation of a plurality of simulation models according to an embodiment of this application;
FIG. 2 is a flowchart of a collaborative simulation method according to an embodiment of this application;
FIG. 3 is a flowchart of a collaborative simulation method according to an embodiment of this application;
FIG. 4 is a schematic diagram of a server-side control apparatus according to an embodiment of this application;
FIG. 5 is a schematic diagram of a client-side control apparatus according to an embodiment of this application;
FIG. 6 is a schematic diagram of an architecture of a control system for controlling collaborative simulation of a plurality of simulation models according to a specific implementation of this application;
FIG. 7 is a schematic flowchart of a collaborative simulation method according to a specific implementation of this application;
FIG. 8 is a schematic diagram of synchronous simulation according to a specific implementation of this application;
FIG. 9 is a schematic diagram of data exchange according to a specific implementation of this application; and
FIG. 10 is a schematic diagram of a computing device according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that the described embodiments are merely some rather than all of embodiments of this application. Generally, components of embodiments of this application described and shown in the accompanying drawings herein may be arranged and designed in various configurations. Therefore, the following detailed descriptions of embodiments of this application provided in the accompanying drawings are not intended to limit the protection scope claimed in this application, but merely to represent selected embodiments of this application. All other embodiments obtained by a person skilled in the art based on embodiments of this application without creative efforts shall fall within the protection scope of this application.

In this specification and claims, the terms "first", "second", "third", and the like or similar terms such as a module A, a module B, and a module C are merely used to distinguish between similar objects, and do not represent a specific order of the objects. It may be understood that specific orders or sequences may be exchanged if permitted, so that embodiments of this application described herein can be implemented in an order other than an order illustrated or described herein.

In the following description, reference numerals of steps such as S110, S120, ..., and the like do not necessarily indicate that the steps are performed in this sequence. If permitted, a sequence of the steps may be changed, or the steps may be simultaneously performed.

The term "include" used in this specification and the claims shall not be construed as being limited to the contents listed below, and does not exclude other elements or steps. It should be construed as specifying existence of a mentioned feature, whole, step, or component, but does not preclude existence or addition of one or more other features, wholes, steps, or components and their groups. Therefore, the expression "a device including apparatuses A and B" should not be limited to a device including only components A and B.

"One embodiment" or "an embodiment" mentioned in this specification means that a particular feature, structure, or characteristic described in combination with the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from the present disclosure to a person of ordinary skill in the art.

Before specific implementations of this application are further described in detail, technical terms in embodiments of this application are described. Unless otherwise defined, all technical and scientific terms used in this specification have same meanings as those usually understood by a person skilled in the art of this application. In case of any inconsistency, the meaning described in this specification or the meaning obtained according to the content recorded in this specification shall be used. In addition, the terms used in this specification are merely for the purpose of describing embodiments of this application, but are not intended to limit this application.

To accurately describe technical content in this application and accurately understand the technical content in this application, the following explanations, descriptions, or definitions are first provided for terms used in this specification before specific implementations are described.

ECU: Electronic Control Unit. An ECU includes a microprocessor (MCU), a memory (ROM or RAM), an input/output interface (I/O), an analog-to-digital (A/D) converter, and a large-scale integrated circuit used for shaping, driving, or the like. The ECU controls each component of a vehicle.

MIL: Model in Loop. In automobile development simulation, in addition to establishment of a vehicle dynamics simulation model and a control and component simulation model that are related to a controller, a controlled-object simulation model and a scenario visualization simulation model also need to be established. The controller and a controlled object are connected to form a closed loop, and a simulation effect is displayed and confirmed through scenario visualization.

SOA: Service Oriented Architecture. The SOA splits different service units of an application and connects the service units by using well-defined interfaces and protocols between these services. The interfaces are defined in a neutral manner and should be independent of the hardware platform, operating system, and programming language that implement the service. This enables services built in a variety of subsystems to interact in a unified and universal manner. When the SOA is used for vehicle MIL simulation and verification, a controlled-object subsystem, a vehicle dynamics subsystem, and a control and component subsystem are established to define the interfaces and protocols between the vehicle MIL collaborative simulation and verification and the model simulation in each subsystem. The interfaces and protocols interact with each other in a unified and universal manner, thereby improving accuracy and efficiency of the vehicle MIL collaborative simulation and verification.

Currently, a technical solution in which a plurality of existing simulation modules or a plurality of pieces of simulation software are combined to perform simulation already exists. However, these simulation modules or these pieces of simulation software are usually developed by different manufacturers or individuals, and input data required for simulation and output simulation result data are relatively complex and usually do not have a unified naming rule. Therefore, different data may use a same name, or same data may use different names in different simulation modules. Therefore, when data is exchanged between these simulation modules during simulation, a data exchange error may easily occur, and consequently, incorrect data is provided for the simulation module as a simulation input, and simulation precision is reduced.

In consideration of the foregoing problem, embodiments of this application provide a collaborative simulation method and apparatus. In the method and apparatus, simulation results output by simulation modules or simulation software are encapsulated by using a designed data structure, so that the encapsulated simulation results can be distinguished from each other even if names of the encapsulated simulation results are the same. Therefore, when these simulation results are subsequently provided to the simulation modules as a simulation input, data can be correctly provided to the simulation modules, and no data exchange error will occur, thereby improving simulation precision.

The following describes principles and beneficial technical effects of the embodiments of this application with reference to the accompanying drawings.

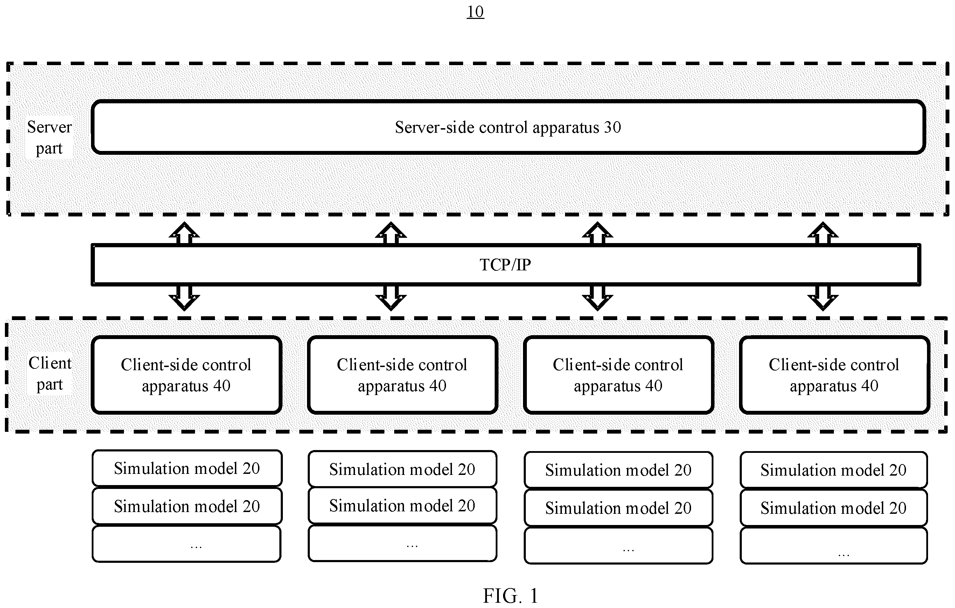

FIG. 1 is a schematic diagram of an architecture of a control system for controlling collaborative simulation of a plurality of simulation models according to an embodiment of this application. The control system 10 shown in FIG. 1 uses a server-client mode to control a plurality of simulation models 20 to perform collaborative simulation, and an entire collaborative simulation process is completed in a plurality of collaborative simulation periods. The simulation model 20 may be any module that can provide a simulation function, for example, including but not limited to a vehicle chassis simulation model, a vehicle body simulation model, a vehicle sensor and actuator simulation model, a vehicle driving scenario simulation model, a vehicle API function interface simulation model, and a vehicle control function simulation model.

The control system 10 includes a server part and a client part, where the server part of the control system 10 may include a server-side control apparatus 30, and the client part of the control system 10 may include at least one client-side control apparatus 40. The server-side control apparatus 30 and the client-side control apparatus 40 may perform data exchange by using any proper communication protocol, where the communication protocol may include, but is not limited to, the Transmission Control Protocol/Internet Protocol (Transmission Control Protocol/Internet Protocol, TCP/IP).

Each client-side control apparatus 40 may correspond to and be associated with at least one simulation model in the plurality of simulation modules 20, to control a simulation module corresponding to and associated with the client-side control apparatus 40 to perform simulation calculation.

When the plurality of simulation models 20 are controlled to perform collaborative simulation, in each collaborative simulation period, the server-side control apparatus 30 and each client-side control apparatus 40 cooperate with each other to provide input data required for simulation to the plurality of simulation models 20, so that one simulation calculation is performed by using the plurality of simulation models 20, and simulation results output by the plurality of simulation models 20 are received as input data required for simulation of the plurality of simulation models 20 in a next collaborative simulation period.

In some embodiments, the server part and the client part included in the control system 10 may be located on a same computing device, and the computing device may be any proper device having a computing capability, for example, including but not limited to a desktop server, a desktop computer, a notebook computer, an industrial controller, and a cloud server. In some embodiments, the server part and the client part included in the control system 10 may be located on different computing devices. In some embodiments, when there are a plurality of client-side control apparatuses 40, the plurality of client-side control apparatuses 40 may be located on a same computing device or located on different computing devices.

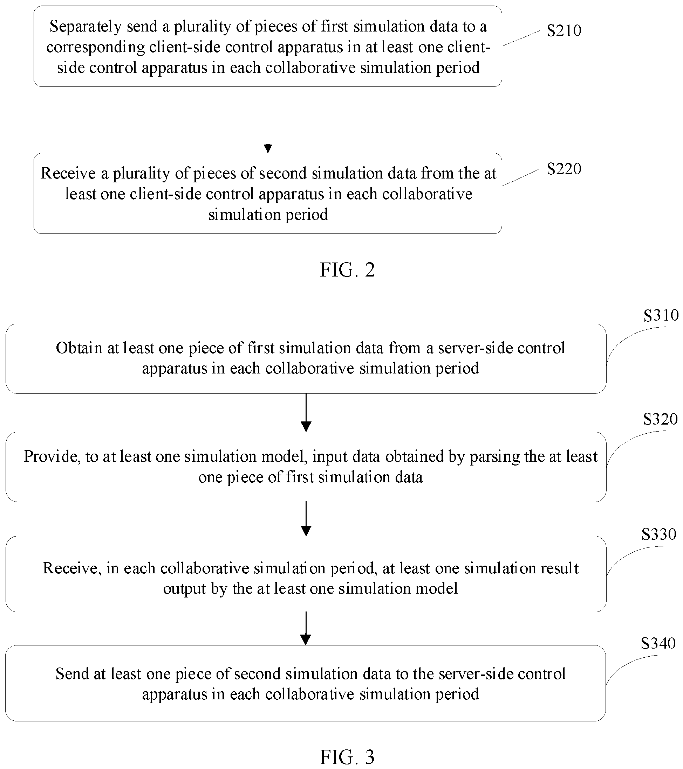

FIG. 2 is a flowchart of a collaborative simulation method according to an embodiment of this application. The method shown in FIG. 2 may be performed by, for example, but not limited to, the server-side control apparatus 30 shown in FIG. 1. The server-side control apparatus 30 may be, for example, but is not limited to, the control apparatus 620 described below. The method shown in FIG. 2 may include steps S210 and S220.

In step S210, in each collaborative simulation period, a plurality of pieces of first simulation data are respectively sent to a corresponding client-side control apparatus in the at least one client-side control apparatus 40, where each client-side control apparatus 40 corresponds to at least one of the plurality of simulation models 20, and the first simulation data sent to each client-side control apparatus 40 is simulation data in which input data required for simulation of the simulation model 20 corresponding to the client-side control apparatus 40 is encapsulated.

When the current collaborative simulation period is not the first collaborative simulation period in the collaborative simulation process, the plurality of pieces of first simulation data of the current collaborative simulation period are second simulation data in a previous collaborative simulation period, which is described later. When the current collaborative simulation period is the first collaborative simulation period in the collaborative simulation process, the plurality of pieces of first simulation data in the current collaborative simulation period may be any proper data, for example, but is not limited to manually preconfigured data or default data.

In some embodiments, the sending the plurality of pieces of first simulation data to the at least one client-side control apparatus 40 may be actively performed by the server-side control apparatus 30. In some embodiments, the sending the plurality of pieces of first simulation data to the at least one client-side control apparatus 40 may be performed by the server-side control apparatus 30 after receiving a request from the at least one client-side control apparatus 40.

In some embodiments, the plurality of pieces of first simulation data may be stored in the server-side control apparatus 30 before being sent. Alternatively, in some embodiments, the plurality of pieces of first simulation data may be stored outside the server-side control apparatus 30 before being sent. In this case, for example, the plurality of pieces of first simulation data may be stored in a data apparatus 610 described below.

In step S220, in each collaborative simulation period, a plurality of pieces of second simulation data are received from the at least one client-side control apparatus 40 as the plurality of pieces of first simulation data in a next collaborative simulation period, where each piece of second simulation data is obtained by encapsulating, by using a same data structure, a simulation result output by one of the simulation models 20, the simulation result is used as the input data in the next collaborative simulation period, and the data structure can be used to distinguish simulation results output by the plurality of simulation models 20 from each other.

It can be learned from the foregoing that the data structure can be used to distinguish simulation results output by the plurality of simulation models 20 from each other, so that each simulation result output by the plurality of simulation models 20 is encapsulated by the data structure, and a plurality of pieces of simulation data that are in a one-to-one correspondence with the simulation results and that are distinguished from each other are obtained. Therefore, when the simulation data is provided to the plurality of simulation models 20 in a next collaborative simulation period, each piece of simulation data can be correctly provided to a corresponding simulation module without a data exchange error, thereby improving precision of collaborative simulation. In addition, it can be further learned from the foregoing that synchronous simulation of the plurality of simulation models 20 is implemented in a manner of a collaborative simulation period, so that data exchange and simulation calculation of the plurality of simulation models 20 are performed at a same progress without disorder, thereby improving precision of collaborative simulation.

In some embodiments, the data structure may include at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result. The data domain is used to indicate a domain to which the data belongs. For example, for vehicle simulation, the data domain may include, for example, but is not limited to, a suspension, a brake, a seat, or a vehicle window.

It can be learned from the foregoing that, in addition to the name of the encapsulated simulation result, the data structure further includes the name of the client-side control apparatus that sends the simulation data in which the encapsulated simulation result is encapsulated and the data domain to which the encapsulated simulation result belongs. Therefore, different simulation results can be distinguished in a simple and effective manner by using the data structure.

In some embodiments, the first simulation data sent to each client-side control apparatus 40 is determined based on a data routing relationship, where the data routing relationship indicates client-side control apparatuses to which the plurality of pieces of first simulation data are respectively sent.

Herein, in some embodiments, the determining, based on the data routing relationship, the first simulation data to be sent to each client-side control apparatus 40 may be performed by the server-side control apparatus 30 only when the first simulation data is to be sent to the client-side control apparatus 40.

Alternatively, in some embodiments, when the server-side control apparatus 30 receives the plurality of pieces of first simulation data, the server-side control apparatus 30 may determine, based on the data routing relationship, the first simulation data to be sent to each client-side control apparatus 40. In this case, after determining which piece or pieces of first simulation data is/are to be sent to each client-side control apparatus 40, the server-side control apparatus 30 may place the first simulation data to be sent to each client-side control apparatus in a sending queue of the client-side control apparatus to wait for sending. Alternatively, after which piece or pieces of first simulation data that is/are to be sent to each client-side control apparatus 40 is determined, the name of the client-side control apparatus to which each piece of first simulation is to be sent is written into each piece of first simulation data, and these pieces of first simulation data are stored, and then each piece of first simulation data is sent based on the name of the client-side control apparatus to which each piece of first simulation is to be sent and that is written into each piece of first simulation data.

It can be learned from the foregoing that the data routing relationship is used to indicate client-side control apparatuses to which the plurality of pieces of first simulation data are respectively sent, and the first simulation data to be sent to each client-side control apparatus is determined based on the data routing relationship. Therefore, the first simulation data to be sent to each client-side control apparatus can be conveniently and quickly determined.

In some embodiments, the data routing relationship includes a plurality of pieces of data, and each piece of data includes: a name of the input data encapsulated in one piece of simulation data in the plurality of pieces of first simulation data; a name of a client-side control apparatus that sends the one piece of the simulation data; a data domain to which the input data encapsulated in the one piece of the simulation data belongs; and a name of a client-side control apparatus that needs to receive the one piece of the simulation data. The data domain is used to indicate a domain to which the data belongs. For example, for vehicle simulation, the data domain may include, for example, but is not limited to, a suspension, a brake, a seat, or a vehicle window.

It can be learned from the foregoing that the data routing relationship defines, by using the name of the input data encapsulated in the first simulation data, the name of the client-side control apparatus that sends the first simulation data, the data domain to which the input data encapsulated in the first simulation data belongs, and the name of the client-side control apparatus that needs to receive the first simulation data, a specific client-side control apparatus to which each piece of first simulation data is to be sent. Therefore, the data routing relationship can be used to define, in a simple and effective manner, a destination control apparatus to which each piece of first simulation data is to reach.

In some embodiments, the collaborative simulation period is longer than first duration, and the first duration is equal to a simulation period of a simulation model 20 with a longest simulation period in the plurality of simulation models.

It can be learned from the foregoing that the collaborative simulation period is longer than the maximum simulation period of the plurality of simulation models 20, so that each simulation calculation of the plurality of simulation models 20 can be completed together. Therefore, time synchronization of the plurality of simulation models 20 is implemented, thereby improving simulation efficiency.

FIG. 3 is a flowchart of a collaborative simulation method according to an embodiment of this application. The method shown in FIG. 3 may be performed by, for example, but not limited to, one of the client-side control apparatuses 40 shown in FIG. 1. The client-side control apparatus 40 may be, for example, but is not limited to, the control apparatus 630 described below. The method shown in FIG. 3 may include steps S310, S320, S330, and S340.

In step S310, in each collaborative simulation period, at least one piece of first simulation data is received from a server-side control apparatus 30, where the at least one piece of first simulation data is simulation data in which input data required for simulation of at least one simulation model 20 of the plurality of simulation models 20 is encapsulated.

Herein, in some embodiments, the obtaining at least one piece of first simulation data from the server-side control apparatus 30 may be: when the server-side control apparatus 30 actively sends the at least one piece of first simulation data to a client-side control apparatus 40, the client-side control apparatus 40 receives the at least one piece of first simulation data sent by the server-side control apparatus 30.

Alternatively, in some embodiments, the obtaining at least one piece of first simulation data from the server-side control apparatus 30 may be: a client-side control apparatus 40 requests the first simulation data from the server-side control apparatus 30, and when the server-side control apparatus 30 sends the at least one piece of first simulation data to the client-side control apparatus 40 in response to the request, the client-side control apparatus 40 receives the at least one piece of first simulation data sent by the server-side control apparatus 30.

In step S320, the input data obtained by parsing the at least one piece of first simulation data is provided to the at least one simulation model 20.

The at least one simulation model 20 starts simulation calculation after receiving the input data.

In step S330, in each collaborative simulation period, at least one simulation result output by the at least one simulation model 20 is received.

Herein, the at least one simulation result is a result that is obtained by performing simulation calculation by the at least one simulation model 20 by using the received input data.

In step S340, in each collaborative simulation period, at least one piece of second simulation data is sent to the server-side control apparatus 30, where each piece of second simulation data is obtained by encapsulating one of the at least one simulation result by using a same data structure, and the data structure can be used to distinguish simulation results output by the plurality of simulation models 20 from each other.

It can be learned from the foregoing that the data structure can be used to distinguish simulation results output by the plurality of simulation models 20 from each other, so that each simulation result output by the plurality of simulation models 20 is encapsulated by the data structure, and a plurality of pieces of simulation data that are in a one-to-one correspondence with the simulation results and that are distinguished from each other are obtained. Therefore, when the simulation data is provided to the plurality of simulation models 20 in a next collaborative simulation period, each piece of simulation data can be correctly provided to a corresponding simulation module without a data exchange error, thereby improving precision of collaborative simulation.

In some embodiments, the data structure may include at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result. The data domain is used to indicate a domain to which the data belongs. For example, for vehicle simulation, the data domain may include, for example, but is not limited to, a suspension, a brake, a seat, or a vehicle window.

It can be learned from the foregoing that, in addition to the name of the encapsulated simulation result, the data structure further includes the name of the client-side control apparatus that sends the simulation data in which the encapsulated simulation result is encapsulated and the data domain to which the encapsulated simulation result belongs. Therefore, different simulation results can be distinguished in a simple and effective manner by using the data structure.

In some embodiments, the collaborative simulation period is longer than first duration, and the first duration is equal to a simulation period of a simulation model 20 with a longest simulation period in the plurality of simulation models.

It can be learned from the foregoing that the collaborative simulation period is longer than the maximum simulation period of the plurality of simulation models 20, so that each simulation calculation of the plurality of simulation models 20 can be completed together. Therefore, time synchronization of the plurality of simulation models 20 is implemented, thereby improving simulation efficiency.

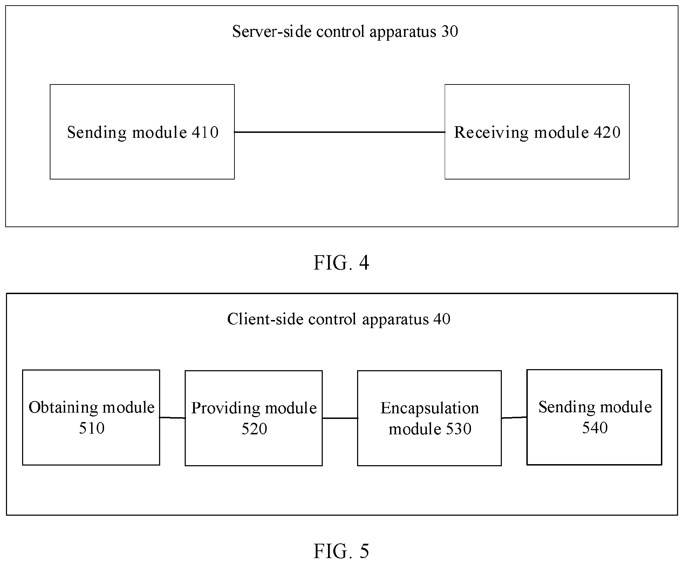

The foregoing has described in detail the embodiments of the methods for controlling collaborative simulation of a plurality of simulation models in this application with reference to FIG. 2 and FIG. 3. The following describes in detail embodiments of an apparatus for controlling collaborative simulation of a plurality of simulation models in this application with reference to FIG. 4 and FIG. 5. It should be understood that the description of the method embodiments corresponds to the description of the apparatus embodiments. Therefore, for a part that is not described in detail in the apparatus embodiments, refer to the foregoing method embodiments.

FIG. 4 is a schematic diagram of a server-side control apparatus according to an embodiment of this application. As shown in FIG. 4, the server-side control apparatus 30 may include a sending module 410 and a receiving module 420.

The sending module 410 may be configured to separately send a plurality of pieces of first simulation data to a corresponding client-side control apparatus in the at least one client-side control apparatus 40 in each collaborative simulation period, where each client-side control apparatus 40 corresponds to at least one of the plurality of simulation models 20, and the first simulation data sent to each client-side control apparatus 40 is simulation data in which input data required for simulation of the simulation model corresponding to the client-side control apparatus is encapsulated.

The receiving module 420 may be configured to receive, in each collaborative simulation period, a plurality of pieces of second simulation data from the at least one client-side control apparatus 40 as the plurality of pieces of first simulation data in a next collaborative simulation period, where each piece of second simulation data is obtained by encapsulating, by using a same data structure, a simulation result output by one of the simulation models 20, the simulation result is used as the input data in the next collaborative simulation period, and the data structure can be used to distinguish simulation results output by the plurality of simulation models 20 from each other.

In some embodiments, the data structure may include at least the following fields: a name of the encapsulated simulation result; a name of the client-side control apparatus that sends the simulation data in which the encapsulated simulation result is encapsulated; a data domain to which the encapsulated simulation result belongs; and a data value of the encapsulated simulation result.

In some embodiments, the first simulation data sent to each client-side control apparatus is determined based on a data routing relationship, where the data routing relationship indicates client-side control apparatuses to which the plurality of pieces of first simulation data are respectively sent.

In some embodiments, the data routing relationship includes a plurality of pieces of data, and each piece of data includes: a name of the input data encapsulated in one piece of simulation data in the plurality of pieces of first simulation data; a name of a client-side control apparatus that sends the one piece of simulation data; a data domain to which the input data encapsulated in the one piece of simulation data belongs; and a name of a client-side control apparatus that needs to receive the one piece of simulation data.

In some embodiments, the collaborative simulation period is longer than first duration, and the first duration is equal to a simulation period of a simulation model with a longest simulation period in the plurality of simulation models.

FIG. 5 is a schematic diagram of a client-side control apparatus according to an embodiment of this application. As shown in FIG. 5, the client-side control apparatus 40 may include an obtaining module 510, a providing module 520, a receiving module 530, and a sending module 540.

The obtaining module 510 may be configured to obtain at least one piece of first simulation data from a server-side control apparatus 30 in each collaborative simulation period, where the at least one piece of first simulation data is simulation data in which input data required for simulation of at least one simulation model in a plurality of simulation models 20 is encapsulated.

The providing module 520 may be configured to provide, to the at least one simulation model, the input data obtained by parsing the at least one piece of first simulation data.

The receiving module 530 may be configured to receive, in each collaborative simulation period, at least one simulation result output by the at least one simulation model.

The sending module 540 may be configured to send at least one piece of second simulation data to the server-side control apparatus 30 in each collaborative simulation period, where each piece of second simulation data is obtained by encapsulating one of the at least one simulation result by using a same data structure, and the data structure can be used to distinguish simulation results output by the plurality of simulation models 20 from each other.

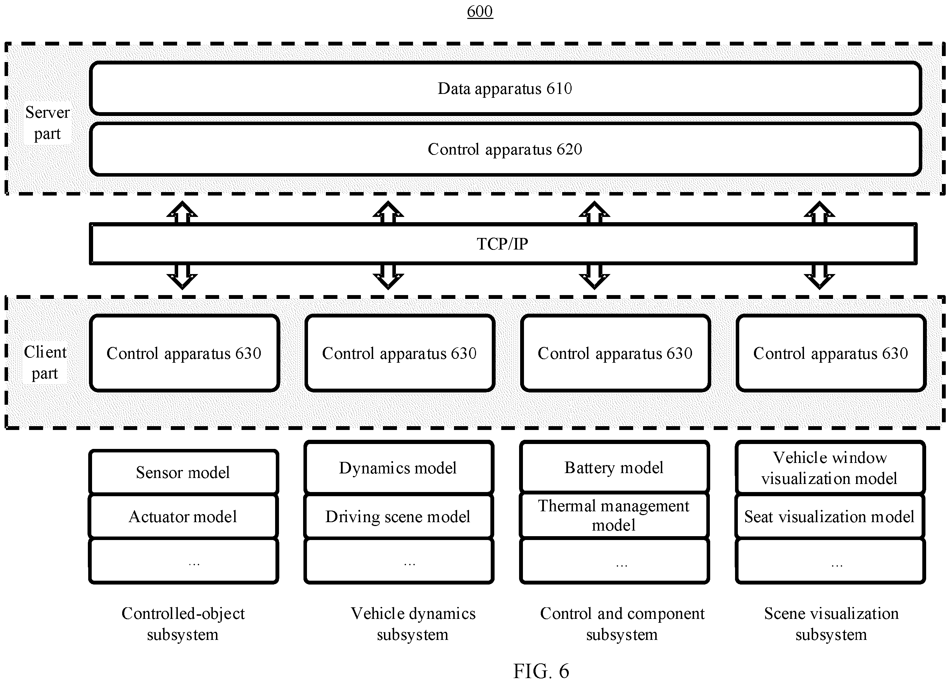

Based on FIG. 6 to FIG. 9, the following describes a specific implementation of a solution for controlling collaborative simulation of a plurality of simulation models in this application by using SOA vehicle "model in loop" collaborative simulation as an example.

FIG. 6 is a schematic diagram of a control system according to a specific implementation of this application. As shown in FIG. 6, a control system 600 controls, in a server-client mode, a plurality of vehicle simulation models to perform collaborative simulation, and the control system 600 includes a server part and a client part, where the client part communicates with the server part by using TCP/IP, to implement data exchange in a simulation process.

The server part of the control system 600 includes a data apparatus 610 and a control apparatus 620. The data apparatus 610 may store a data routing relationship and data received by the control apparatus 620 from a control apparatus 630 described below.

The client part of the control system 600 includes four control apparatuses 630.

The first control apparatus 630 corresponds to and is associated with a sensor simulation model, an actuator simulation model, and the like, and is configured to control simulation calculation of the sensor simulation model, the actuator simulation model, and the like. The first control apparatus 630, the sensor simulation model and the actuator simulation model that correspond to the first control apparatus 630, and the like form a controlled-object subsystem. The first control apparatus 630 is set to have the same name as the controlled-object subsystem in which the first control apparatus 630 is located.

The second control apparatus 630 corresponds to and is associated with a dynamics simulation model, a driving scenario simulation model, and the like, and is configured to control simulation calculation of the dynamics simulation model, the driving scenario simulation model, and the like. The second control apparatus 630, the dynamics simulation model and the driving scenario simulation model that correspond to the second control apparatus 630, and the like form a vehicle dynamics subsystem. The second control apparatus 630 is set to have a same name as the vehicle dynamics subsystem in which the second control apparatus 630 is located.

The third control apparatus 630 corresponds to and is associated with a battery simulation model, a thermal management simulation model, and the like, and is configured to control simulation calculation of the battery simulation model, the thermal management simulation model, and the like. The third control apparatus 630, the battery simulation model and the thermal management simulation model that correspond to the third control apparatus 630, and the like form a control and component subsystem. The third control apparatus 630 is set to have the same name as the control and component subsystem in which the third control apparatus 630 is located.

The fourth control apparatus 630 corresponds to and is associated with a vehicle window visualization simulation model, a seat visualization simulation model, and the like, and is configured to control simulation calculation of the vehicle window visualization simulation model, the seat visualization simulation model, and the like. The fourth control apparatus 630, the vehicle window visualization simulation model and the seat visualization simulation model that correspond to the fourth control apparatus 630, and the like form a scenario visualization subsystem. The fourth control apparatus 630 is set to have a same name as the scenario visualization subsystem in which the fourth control apparatus 630 is located.

FIG. 6 is an example of a client deployment in which subsystem functions implemented by each control apparatus in the client part and corresponding and associated simulation models are configured based on simulation function classification. In actual use, different quantities of control apparatuses may be configured in the client part according to an actual scenario, a subsystem function implemented by each control apparatus, and a corresponding simulation model that may be configured in each subsystem. The data apparatus 610, the control apparatus 620, and the control apparatus 630 may be located in a synchronization equipment room or deployed in a distributed manner.

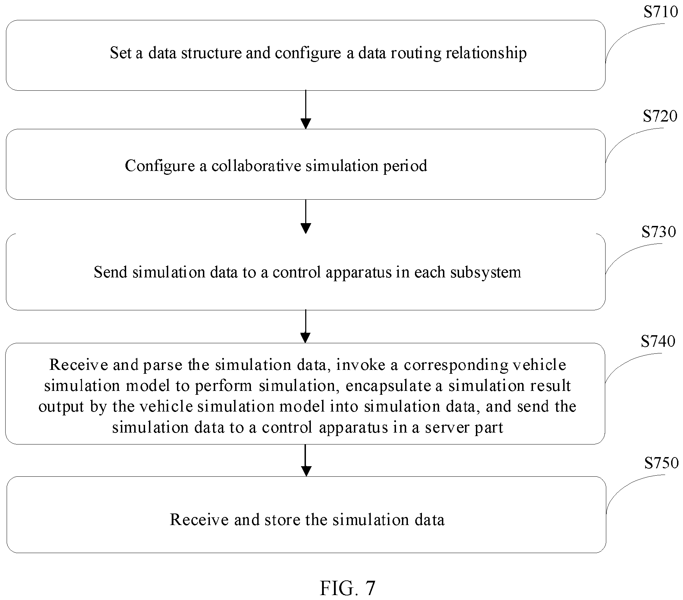

FIG. 7 is a flowchart of a method for controlling collaborative simulation of a plurality of vehicle simulation models according to a specific implementation of this application. As shown in FIG. 7, the method 700 may include steps S710 to S750.

In step S710, fields included in a data structure DS for encapsulating each simulation result output by each vehicle simulation module are set, and a data routing relationship is configured.

Specifically, a definition of each simulation result output by each simulation model in each subsystem is obtained, and the data structure DS is set to include the following fields:
a name of a simulation result;
a name of a control apparatus;
a data domain;
a period; and
a data value.

The name of the simulation result indicates a name of the simulation result encapsulated by the data structure DS.

The name of the control apparatus indicates a name of the control apparatus 630 that sends the simulation result encapsulated by the data structure DS to the control apparatus 620. As described above, each control apparatus 630 has a same name as a subsystem in which the control apparatus 630 is located. Therefore, the name of the control apparatus herein may also be considered as a name of a subsystem in which the control apparatus 630 that sends the simulation result encapsulated by the data structure DS to the control apparatus 620 is located. Herein, as described above, the subsystem includes a controlled-object subsystem, a vehicle dynamics subsystem, a control and component subsystem, and a scenario visualization subsystem.

The data domain is used to indicate a data domain to which the simulation result encapsulated by the data structure DS belongs. Herein, the data domains may include, for example, a suspension, a brake, a seat, and a vehicle window.

The period is a timestamp of the simulation result encapsulated by the data structure DS, and indicates a collaborative simulation period in which the simulation result is generated.

The data domain indicates a data type of the simulation result encapsulated by the data structure DS, which may include, for example, but is not limited to, an integer type, a double-precision integer type, and a character type.

The data value indicates a data value of the simulation result encapsulated by the data structure DS.

The name of the simulation result, the name of the control apparatus, and the data domain form a data label of the simulation result encapsulated by the data structure DS. In a collaborative simulation period, the data label is used as a unique identifier of the simulation result, to resolve a problem of complexity of a simulation result data name, for example, a problem that different simulation results use a same name.

In addition, an input data definition of each vehicle simulation model in each subsystem is obtained, a correspondence between input data of each vehicle simulation model in each collaborative simulation period and a simulation result of each vehicle simulation model in a previous collaborative simulation period is sorted out, and the data routing relationship is determined, to indicate a control apparatus 630 or control apparatuses 630 to which the simulation data that is from each control apparatus 630 and in which a simulation result is encapsulated in each collaborative simulation period is to be sent in a next collaborative simulation period.

Herein, the data routing relationship may be a data routing relationship table, the data routing relationship table includes a plurality of pieces of data, and each piece of data includes a data label of one simulation result and a name of a control apparatus 630 corresponding to and associated with the vehicle simulation model that uses the one simulation result as the input data. As described above, the name of the control apparatus 630 may also be represented by a name of a subsystem in which the control apparatus 630 is located.

In step S720, a collaborative simulation period is configured.

Specifically, a simulation period of each vehicle simulation model in each subsystem is obtained, and the collaborative simulation period is determined, where the collaborative simulation period is longer than a simulation period of a vehicle simulation model with a longest simulation period in vehicle simulation models in all subsystems. The determined collaborative simulation period is used by the control apparatus 620 and each control apparatus 630.

Steps S710 and S720 are completed before the collaborative simulation process starts, for example, but are not limited to being completed manually.

In step S730, the control apparatus 620 sends, to the control apparatus 630 in each subsystem, the simulation data in which the simulation result used as the input data is encapsulated.

Specifically, after the collaborative simulation process starts, in each collaborative simulation period, the control apparatus 620 sends each piece of simulation data stored in the data apparatus 610 to a corresponding control apparatus 630 in each subsystem. The control apparatus 630 to which each piece of simulation data is to be sent is determined based on the data routing relationship stored in the data apparatus 610 and the data label of each piece of simulation data. Each piece of simulation data stored in the data apparatus 610 is data that is received from each control apparatus 630 in a previous collaborative simulation period and in which a simulation result is encapsulated; and each piece of simulation data is obtained by encapsulating, in a corresponding control apparatus 630 by using the data structure DS, a simulation result output by a vehicle simulation module.

In step S740, each control apparatus 630 receives and parses the simulation data sent by the control apparatus 620, invokes a corresponding vehicle simulation model to perform simulation, encapsulates a simulation result output by the vehicle simulation model into simulation data, and sends the simulation data to the control apparatus 620.

Specifically, each control apparatus 630 receives simulation data from the control apparatus 620, parses the received simulation data based on the data structure DS, to obtain a simulation result encapsulated in the simulation data as input data, and provides, by using a simulation model API interface, the simulation result used as the input data to a corresponding vehicle simulation model to drive the vehicle simulation model to perform simulation calculation, and receives each simulation result output by the vehicle simulation model, encapsulating, based on the data structure DS, each received simulation result into simulation data to generate one or more pieces of simulation data, and sending the generated simulation data to the control apparatus 620 in a current collaborative simulation period.

In step S750, the control apparatus 620 receives each piece of simulation data from each control apparatus 630, and stores the simulation data in the data apparatus 610. The simulation data is sent to the control apparatus 630 in a next collaborative simulation period.

Steps S730, S740, and S750 are sequentially performed until the simulation ends.

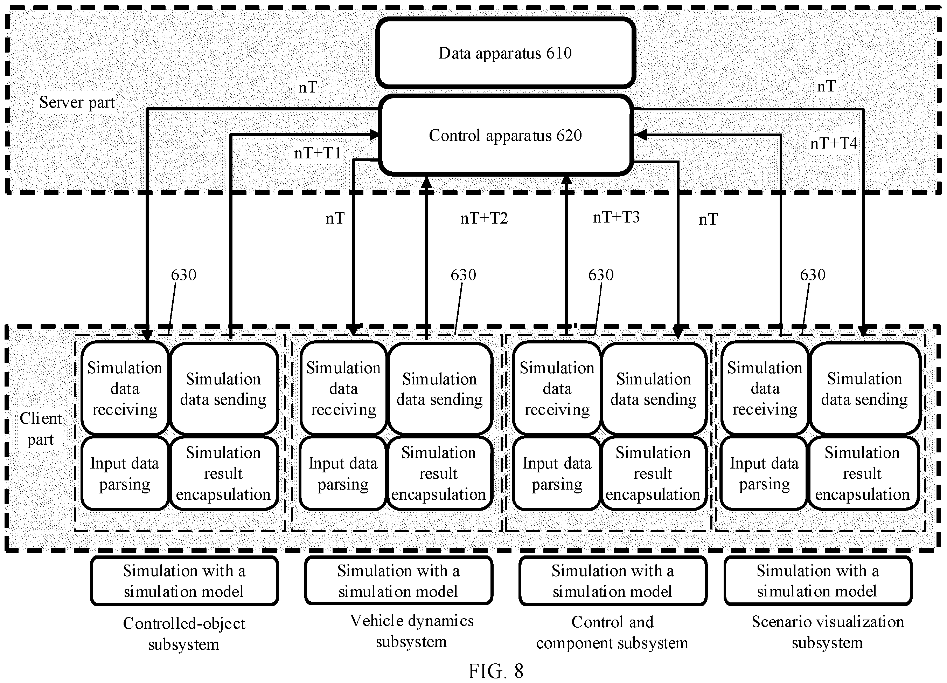

FIG. 8 is a schematic diagram of collaborative simulation in a collaborative simulation period according to a specific implementation of this application. FIG. 8 shows collaborative simulation of vehicle simulation modules in a controlled-object subsystem, a vehicle dynamics subsystem, a control and component subsystem, and a scenario visualization subsystem in an n^{th} collaborative simulation period. Duration of the collaborative simulation period is T.

In the n^{th} collaborative simulation period, the control apparatuses 630 in the controlled-object subsystem, the vehicle dynamics subsystem, the control and component subsystem, and the scenario visualization subsystem each receive, at a moment nT, the simulation data that is sent by the control apparatus 620 and in which the simulation result used as the input data is encapsulated.

The control apparatus 630 in each subsystem parses the received simulation data, to obtain a simulation result encapsulated in the simulation data as input data. The control apparatus 630 in each subsystem provides, to a corresponding vehicle simulation model, an obtained simulation result that is used as input data, to drive the vehicle simulation model to perform simulation calculation.

The control apparatus 630 in each subsystem receives each simulation result output by a corresponding vehicle simulation module. The control apparatus 630 in each subsystem encapsulates each received simulation result into one piece of simulation data by using a data structure DS.

After receiving the simulation data from the control apparatus 620, the control apparatus 630 in the controlled-object subsystem completes encapsulation of the simulation result after a time T1. Therefore, the control apparatus 630 in the controlled-object subsystem sends, to the control apparatus 620 at a moment nT+T1, each piece of simulation data obtained through encapsulation.

After receiving the simulation data from the control apparatus 620, the control apparatus 630 in the vehicle dynamics subsystem completes encapsulation of the simulation result after a time T2. Therefore, the control apparatus 630 in the vehicle dynamics subsystem sends, to the control apparatus 620 at a moment nT+T2, each piece of simulation data obtained through encapsulation.

After receiving the simulation data from the control apparatus 620, the control apparatus 630 in the control and component subsystem completes encapsulation of the simulation result after a time T3. Therefore, the control apparatus 630 in the control and component subsystem sends, to the control apparatus 620 at a moment nT+T3, each piece of simulation data obtained through encapsulation.

After receiving the simulation data from the control apparatus 620, the control apparatus 630 in the scenario visualization subsystem completes encapsulation of the simulation result after a time T4. Therefore, the control apparatus 630 in the scenario visualization subsystem sends, to the control apparatus 620 at a moment nT+T4, each piece of simulation data obtained through encapsulation.

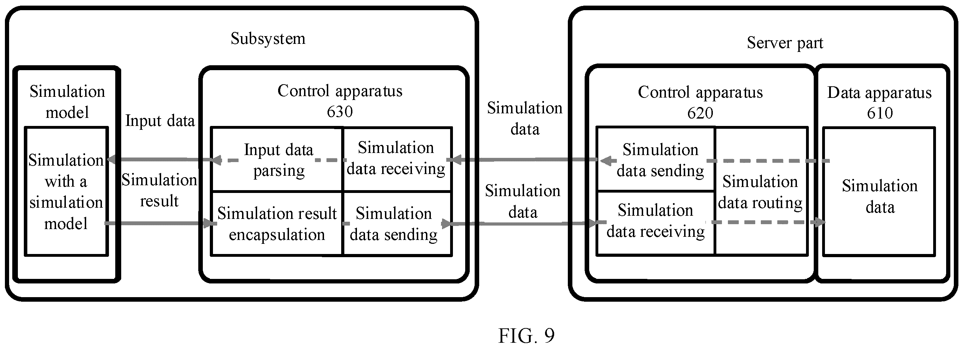

FIG. 9 is a schematic diagram of data exchange according to a specific implementation of this application. The data exchange shown in FIG. 9 is a more detailed description of the operations in the foregoing steps S730, S740, and S750.

As shown in FIG. 9, in each collaborative simulation period, the control apparatus 620 sends each piece of simulation data stored in the data apparatus 610 to a corresponding control apparatus 630 by using a TCP/IP communication protocol. Herein, if the data apparatus 610 to which each piece of simulation data is to be sent is already known in advance, for example, each piece of simulation data is already placed in a sending queue of a corresponding control apparatus 630 in the data apparatus 610, or each piece of simulation data is already written into the control apparatus 630 to which the simulation data is to be sent, the control apparatus 620 directly sends the simulation data. If the data apparatus 610 to which each piece of simulation data is to be sent is still unknown, the control apparatus 620 determines, based on the data routing relationship stored in the data apparatus 610 and the data label of each piece of simulation data, the data apparatus 610 to which each piece of simulation data is to be sent, and sends each piece of simulation data based on a determining result.

The foregoing operations of the control apparatus 620 may be actively initiated by the control apparatus 620. Alternatively, the foregoing operations of the control apparatus 620 may be initiated only when the control apparatus 630 in each subsystem sends, to the control apparatus 630, a message for requesting simulation data.

The control apparatus 630 in each subsystem receives one or more pieces of simulation data sent by the control apparatus 620, and parses the received simulation data, to obtain a simulation result encapsulated in the simulation data, and uses the simulation result as input data of the vehicle simulation model.

The control apparatus 630 in each subsystem provides, to a corresponding vehicle simulation model by invoking an API of the simulation model, each obtained simulation result that is used as input data, to drive the vehicle simulation model to perform simulation calculation.

Each vehicle simulation model in each subsystem performs simulation calculation by using input data received from the control apparatus 630, and outputs a simulation result obtained through simulation calculation to the control apparatus 630 corresponding to and associated with the vehicle simulation model.

The control apparatus 630 in each subsystem encapsulates each simulation result received from the vehicle simulation model into one piece of simulation data, to obtain one or more pieces of simulation data, and sends the obtained simulation data to the control apparatus 620 in a current collaborative simulation period.

The control apparatus 620 receives each piece of simulation data sent by the control apparatus 630 in each subsystem, and processes each piece of received simulation data in one of the following three manners.

In the first manner, the control apparatus 620 does not perform any processing on each piece of simulation data received from the control apparatus 630, and directly stores the simulation data in the data apparatus 610.

In the second manner, the control apparatus 620 determines, based on the data routing relationship stored in the data apparatus 610 and the data label of each piece of simulation data, a control apparatus 630 or control apparatuses 630 to which each piece of simulation data is to be sent in a next collaborative simulation period, and stores, based on a determining result, the simulation data in a sending queue that is of a corresponding control apparatus 630 and that is in the data apparatus 610 to wait for sending in the next collaborative simulation period.

In the third manner, the control apparatus 620 determines, based on the data routing relationship stored in the data apparatus 610 and the data label of each piece of simulation data, a control apparatus 630 or control apparatuses 630 to which each piece of simulation data is to be sent in a next collaborative simulation period, writes, in each piece of simulation data based on a determining result, a name of each control apparatus 630 to which each piece of simulation data is to be sent in the next collaborative simulation period, and then stores the simulation data in the data apparatus 610.

In conclusion, a specific implementation of the method for controlling collaborative simulation of a plurality of simulation models is used for SOA vehicle MIL collaborative simulation, and covers simulation models in a plurality of subsystems such the controlled-object subsystem, the vehicle dynamics subsystem, the control and component subsystem, and the scenario visualization subsystem. A problem of data complexity between the subsystems is resolved by using a set first data structure, so that collaborative simulation and verification of a function and performance of the vehicle MIL are performed, thereby improving precision and efficiency of SOA vehicle MIL simulation and verification.

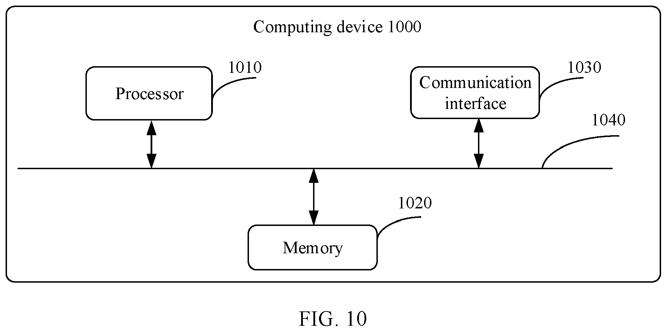

FIG. 10 is a schematic diagram of a structure of a computing device according to an embodiment of this application. As shown in FIG. 10, the computing device 1000 may include a processor 1010, a memory 1020, a communication interface 1030, and a bus 1040.

It should be understood that the communication interface 1030 in the computing device 1000 shown in FIG. 10 may be used for communication with another device.

The processor 1010 may be connected to the memory 1020. The memory 1020 may be configured to store program code and data. Therefore, the memory 1020 may be an internal storage module of the processor 1010, may be an external storage module independent of the processor 1010, or may be a component that includes an internal storage module of the processor 1010 and an external storage module independent of the processor 1010.

The computing device 1000 may further include the bus 1040. The memory 1020 and the communication interface 1030 may be connected to the processor 1010 through the bus 1040. The bus 1040 may be a peripheral component interconnect (Peripheral Component Interconnect, PCI) bus, an extended industry standard architecture (Extended Industry Standard Architecture, EISA) bus, or the like. The bus 1040 may be classified into an address bus, a data bus, a control bus, and the like. For ease of representation, only one line is used to represent the bus in FIG. 10, but this does not mean that there is only one bus or only one type of bus.

It should be understood that, in this embodiment of this application, the processor 1010 may be a central processing unit (central processing unit, CPU). The processor may be alternatively a general-purpose processor, a digital signal processor (digital signal processor, DSP), an application-specific integrated circuit (application specific integrated circuit, ASIC), a field programmable gate array (field programmable gate Array, FPGA) or another programmable logic device, a discrete gate or transistor logic device, or a discrete hardware component. The general-purpose processor may be a microprocessor, or the processor may be any conventional processor or the like. Alternatively, the processor 1010 uses one or more integrated circuits, and is configured to execute a related program, to implement the technical solutions provided in embodiments of this application.

The memory 1020 may include a read-only memory and a random access memory, and provides instructions and data to the processor 1010. A part of the processor 1010 may further include a non-volatile random access memory. For example, the processor 1010 may further store device type information.

When the computing device 1000 runs, the processor 1010 executes computer executable instructions in the memory 1020 to perform the operation steps of the foregoing method.

It should be understood that the computing device 1000 according to this embodiment of this application may correspond to a corresponding execution body of the methods according to the embodiments of this application, and the foregoing and other operations and/or functions of modules in the computing device 1000 are separately intended to implement corresponding procedures of the methods according to the embodiments. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When the program is executed by a processor, the program is used to perform a method for controlling collaborative simulation of a plurality of simulation models. The method includes at least one of the solutions described in the foregoing embodiments.

The computer storage medium according to this embodiment of this application may be any combination of one or more computer-readable media. The computer-readable medium may be a computer-readable signal medium or a computer-readable storage medium. For example, the computer-readable storage medium may be, but is not limited to, an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any proper combination thereof. In this specification, the computer-readable storage medium may be any tangible medium that includes or stores a program, and the program may be used by or in combination with an instruction execution system, apparatus, or device.

The computer-readable signal medium may include a data signal that is propagated in baseband or as part of a carrier wave, where the data signal carries computer-readable program code. The propagated data signal may be in a plurality of forms, including but not limited to an electromagnetic signal, an optical signal, or any appropriate combination thereof. The computer-readable signal medium may alternatively be any computer-readable medium other than the computer-readable storage medium. The computer-readable medium may send, propagate, or transmit a program used by or in combination with an instruction execution system, apparatus, or device.

Program code included in the computer-readable medium may be transmitted by using any proper medium, including but not limited to wireless, electric wire, an optical cable, RF, or any proper combination thereof.

The computer program code for performing operations in this application may be compiled by using one or more programming languages or a combination thereof. The programming languages include object-oriented programming languages such as Java, Smalltalk, C++, and also include conventional procedural programming languages such as "C" language or similar programming languages. The program code may be executed entirely on a user computer, or some may be executed on a user computer as a separate software package, or some may be executed on a user computer while some is executed on a remote computer, or the code may be entirely executed on a remote computer or a server. When a remote computer is involved, the remote computer may be connected to a user computer through any type of network, including a local area network (LAN) or a wide area network (WAN), or may be connected to an external computer (for example, connected by using an Internet service provider through the Internet).

It should be noted that the foregoing descriptions are merely example embodiments and technical principles of this application. A person skilled in the art may understand that this application is not limited to specific embodiments described herein, and a person skilled in the art may make various obvious changes, readjustments, and replacements without departing from the protection scope of this application. Therefore, although this application is described in detail by using the foregoing embodiments, this application is not limited to the foregoing embodiments, and may further include more other equivalent embodiments without departing from the concept of this application. These embodiments all fall within the protection scope of this application.

## Claims

1. A collaborative simulation method, comprising:
separately sending a plurality of pieces of first simulation data to a corresponding client-side control apparatus in at least one client-side control apparatus in each collaborative simulation period, wherein each client-side control apparatus corresponds to at least one of a plurality of simulation models, and the first simulation data sent to each client-side control apparatus is simulation data in which input data required for simulation of the simulation model corresponding to the client-side control apparatus is encapsulated; and
receiving, in each collaborative simulation period, a plurality of pieces of second simulation data from the at least one client-side control apparatus as the plurality of pieces of first simulation data in a next collaborative simulation period, wherein
each piece of second simulation data is data obtained by encapsulating, by using a same data structure, a simulation result output by one of the plurality of simulation models, the simulation result is used as the input data in a next collaborative simulation period, and the data structure can be used to distinguish simulation results output by the plurality of simulation models from each other.

2. The method according to claim 1, wherein the data structure comprises at least the following fields:
a name of the encapsulated simulation result;
a name of the client-side control apparatus that sends the simulation data in which the encapsulated simulation result is encapsulated;
a data domain to which the encapsulated simulation result belongs; and
a data value of the encapsulated simulation result.

3. The method according to claim 1, wherein
the first simulation data sent to each client-side control apparatus is determined based on a data routing relationship, wherein
the data routing relationship indicates client-side control apparatuses to which the plurality of pieces of first simulation data are respectively sent.

4. The method according to claim 3, wherein the data routing relationship comprises a plurality of pieces of data, and each piece of data comprises:
a name of the input data encapsulated in one piece of simulation data in the plurality of pieces of first simulation data;
a name of a client-side control apparatus that sends the one piece of simulation data;
a data domain to which the input data encapsulated in the one piece of simulation data belongs; and
a name of a client-side control apparatus that needs to receive the one piece of simulation data.

5. The method according to claim 1, wherein the collaborative simulation period is longer than first duration, and the first duration is equal to a simulation period of a simulation model with a longest simulation period in the plurality of simulation models.

6. A collaborative simulation method, comprising:
obtaining at least one piece of first simulation data from a server-side control apparatus in each collaborative simulation period, wherein the at least one piece of first simulation data is simulation data in which input data required for simulation of at least one simulation model in a plurality of simulation models is encapsulated;
providing, to the at least one simulation model, the input data obtained by parsing the at least one piece of first simulation data;
receiving, in each collaborative simulation period, at least one simulation result output by the at least one simulation model; and
sending at least one piece of second simulation data to the server-side control apparatus in each collaborative simulation period, wherein each piece of second simulation data is obtained by encapsulating one of the at least one simulation result by using a same data structure, and the data structure can be used to distinguish simulation results output by the plurality of simulation models from each other.

7. The method according to claim 6, wherein the data structure comprises at least the following fields:
a name of the encapsulated simulation result;
a name of the client-side control apparatus that sends the simulation data in which the encapsulated simulation result is encapsulated;
a data domain to which the encapsulated simulation result belongs; and
a data value of the encapsulated simulation result.

8. The method according to claim 6, wherein the collaborative simulation period is longer than first duration, and the first duration is equal to a simulation period of a simulation model with a longest simulation period in the plurality of simulation models.

9. A server-side control apparatus, comprising:
a sending module, configured to separately send a plurality of pieces of first simulation data to a corresponding client-side control apparatus in at least one client-side control apparatus in each collaborative simulation period, wherein each client-side control apparatus corresponds to at least one of a plurality of simulation models, and the first simulation data sent to each client-side control apparatus is simulation data in which input data required for simulation of the simulation model corresponding to the client-side control apparatus is encapsulated; and
a receiving module, configured to receive, in each collaborative simulation period, a plurality of pieces of second simulation data from the at least one client-side control apparatus as the plurality of pieces of first simulation data in a next collaborative simulation period, wherein
each piece of second simulation data is data obtained by encapsulating, by using a same data structure, a simulation result output by one of the plurality of simulation models, the simulation result is used as the input data in a next collaborative simulation period, and the data structure can be used to distinguish simulation results output by the plurality of simulation models from each other.

10. The server-side control apparatus according to claim 9, wherein the data structure comprises at least the following fields:
a name of the encapsulated simulation result;
a name of the client-side control apparatus that sends the simulation data in which the encapsulated simulation result is encapsulated;
a data domain to which the encapsulated simulation result belongs; and
a data value of the encapsulated simulation result.

11. The server-side control apparatus according to claim 9, wherein
the first simulation data sent to each client-side control apparatus is determined based on a data routing relationship, wherein
the data routing relationship indicates client-side control apparatuses to which the plurality of pieces of first simulation data are respectively sent.

12. The server-side control apparatus according to claim 11, wherein the data routing relationship comprises a plurality of pieces of data, and each piece of data comprises:
a name of the input data encapsulated in one piece of simulation data in the plurality of pieces of first simulation data;
a name of a client-side control apparatus that sends the one piece of simulation data;
a data domain to which the input data encapsulated in the one piece of simulation data belongs; and
a name of a client-side control apparatus that needs to receive the one piece of simulation data.

13. The server-side control apparatus according to claim 9, wherein the collaborative simulation period is longer than first duration, and the first duration is equal to a simulation period of a simulation model with a longest simulation period in the plurality of simulation models.

14. A client-side control apparatus, comprising:
an obtaining module, configured to obtain at least one piece of first simulation data from a server-side control apparatus in each collaborative simulation period, wherein the at least one piece of first simulation data is simulation data in which input data required for simulation of at least one simulation model in a plurality of simulation models is encapsulated;
a providing module, configured to provide, to the at least one simulation model, the input data obtained by parsing the at least one piece of first simulation data;
a receiving module, configured to receive, in each collaborative simulation period, at least one simulation result output by the at least one simulation model; and
a sending module, configured to send at least one piece of second simulation data to the server-side control apparatus in each collaborative simulation period, wherein each piece of second simulation data is obtained by encapsulating one of the at least one simulation result by using a same data structure, and the data structure can be used to distinguish simulation results output by the plurality of simulation models from each other.

15. The client-side control apparatus according to claim 14, wherein the data structure comprises at least the following fields:
a name of the encapsulated simulation result;
a name of the client-side control apparatus that sends the simulation data in which the encapsulated simulation result is encapsulated;
a data domain to which the encapsulated simulation result belongs; and
a data value of the encapsulated simulation result.

16. The client-side control apparatus according to claim 14, wherein the collaborative simulation period is longer than first duration, and the first duration is equal to a simulation period of a simulation model with a longest simulation period in the plurality of simulation models.

17. A control system, comprising:
the server-side control apparatus according to any one of claims 9 to 13; and
at least one client-side control apparatus according to any one of claims 14 to 16.

18. A computing device, comprising at least one processor and at least one memory, wherein the memory stores program instructions, and when the program instructions are executed by the at least one processor, the at least one processor is enabled to perform the method according to any one of claims 1 to 5 or perform the method according to any one of claims 6 to 8.

19. A computer-readable storage medium, wherein the computer-readable storage medium stores program instructions, and when the program instructions are executed by a computer, the computer is enabled to perform the method according to any one of claims 1 to 5 or perform the method according to any one of claims 6 to 8.

20. A computer program product, comprising program instructions, wherein when the program instructions are executed by a computer, the computer is enabled to perform the method according to any one of claims 1 to 5 or perform the method according to any one of claims 6 to 8.
